# EUROPEAN PATENT APPLICATION

(11) **EP 1 450 274 A2**
(43) Date of publication of application: **25.08.2004**
(21) Application number: 04004067.7
(22) Date of filing: 23.02.2004
(51) Int. Cl.: G06F 17/30

(54) **Dimension-based partitioned cube**

(30) Priority: 21.02.2003 CA 2419502
(71) Applicant: Cognos Incorporated, Ottawa, Ontario K1G 4k9 (CA)
(72) Inventor: Potter, Charles M., Ottawa, ON K2G 6H4 (CA); Zelenka, Joseph, Markham, ON L3R 8MI (CA); Moffat, Donald, Ottawa, ON K1V 0G3 (CA)
(74) Representative: Manitz, Finsterwald & Partner GbR

(57) **Abstract**

A system for storing data is provided. The system comprises one or more member cubes for storing dimension-based partitioned data, and a control cube for accessing the member cubes.

## Description

### FIELD OF THE INVENTION

The invention relates generally to software and databases, and in particular to a dimension-based partitioned cube.

### BACKGROUND OF THE INVENTION

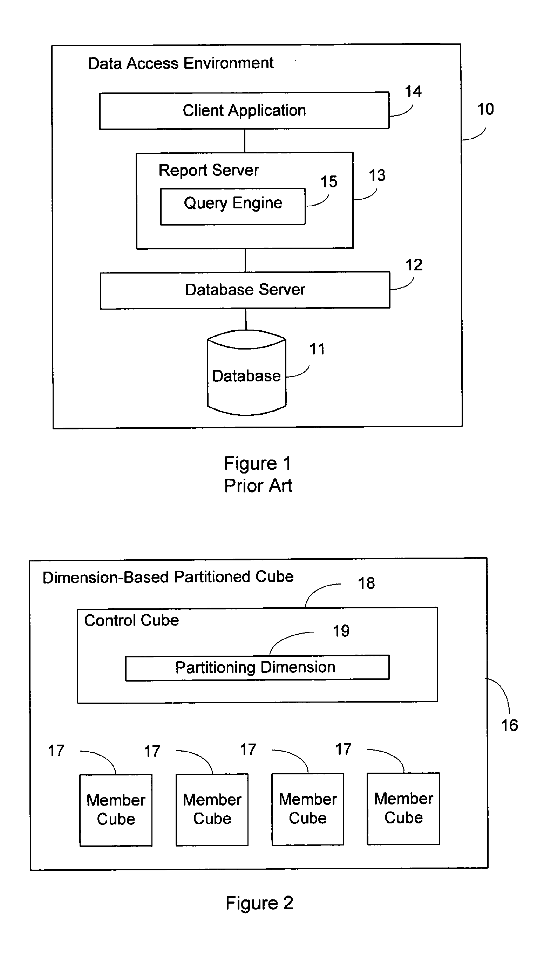

Figure 1 shows a typical data access environment 10 for processing data. Typically, data is stored in a database 11. A database server 12, e.g., structured query language (SQL) server, accesses the raw data stored in the database 11. A report server 13 is used to generate reports on the raw data and instruct the database server 12 to obtain information pertaining to the raw data in the database 11. A client application 14 is used by an end user to facilitate report server 13 operations. Typically, a report server 13 has a query engine 15 for universal data access (UDA).

Online analytical processing (OLAP) is a growing application area of information technology (IT). The data subject to OLAP analysis is typically stored either in a relational online analytical processing (ROLAP) database or in a data structure that has been designed specifically for this purpose - a multidimensional online analytical processing (MOLAP) database, i.e., a cube.

ROLAP may theoretically handle an unlimited volume of data, but the analysis is generally slow. Cubes have better performance, but, typically, the size of a cube is subject to limitations due to intrinsic constraints. The performance of a cube arises from its design: cubes are optimized for fast access rather than for ease of their creation and update. During an initial cube creation, and when the cube is being maintained, the data is analyzed and structures are created to enable fast access of selected subsets of the data in any of its business dimensions or combination of dimensions.

In most cases, the data to be analyzed is not all available at the time the cube is created. Typically, the data arises at regular intervals and must be added to an existing cube. As indicated above, cubes are ill suited for growing data volume in time. There are two aspects to this issue: rigidity of internal data structures and lack of support of changing data attributes in time (i.e., slowly changing dimensions).

With respect to the rigidity of internal data structures issue, the internal structures in cubes are optimized for fast access of the original data set. When adding data to the cube, updating these structures is slow and inefficient, and the resulting structures may not be optimal for accessing the total set of data in the new cube. Consequently, as the cube complexity grows in time and volume, its performance deteriorates.

With respect to the slowly changing dimensions issue, data attributes (i.e., metadata) stored in the cube are static. Even though they evolve in time (e.g., products are introduced/discontinued; a corporation structure and hierarchy is re-organized; staff moves in, out and within the organization; new sales channels appear; etc.) the same multi-dimensional metadata structure is applied to all time intervals, regardless of whether or not all attributes apply in a given time interval. This universal application increases the volume of information noise in analytic results and reports. This increase in volume makes the interpretation of the analytic results and reports increasingly harder with progress of time.

The problem of performance of updating an existing cube and accessing the resulting cube has not been solved in the past. Support of slowly changing dimensions is common in ROLAP systems but seldom and poorly supported in cubes.

### SUMMARY OF THE INVENTION

The present invention solves one or more of the problems outlined above.

In accordance with an embodiment of the present invention, there is provided a system for storing data. The system comprises one or more member cubes for storing dimension-based partitioned data, and a control cube for accessing the member cubes.

In accordance with another embodiment of the present invention, there is provided a method of transforming a body of data into a dimension-based partitioned cube. The method comprises the steps of partitioning the data into one or more dimension partitions, creating member cubes corresponding to the one or more dimension partitions, and creating a control cube for representing the data distributed over the member cubes.

In accordance with another embodiment of the present invention, there is provided a method of querying a dimension-based partitioned cube. The method comprises the steps of analyzing a query received for a body of data organized into a dimension-based partition cube, redirecting the query to one or more member cubes, and aggregating results received from the one or more member cubes.

### BRIEF DESCRIPTION OF THE DRAWINGS

Figure 1 shows a typical data access environment.
Figure 2 shows an example of a dimension-based partitioned cube, in accordance with an embodiment of the present invention.
Figure 3 shows an example of a time-based partitioned cube, in accordance with the dimension-based partitioned cube.
Figure 4 shows an example of a method for transforming a body of data into a time-based partitioned cube, in accordance with an embodiment of the time-based partitioned cube.
Figure 5 shows an example of a schematic representation of partitioning data in time, in accordance with an embodiment of the time-based partitioned cube.
Figure 6 shows another example of a time-based partitioned cube.
Figure 7 shows another example of a partition of data in time, in accordance with an embodiment of the time-based partitioned cube.
Figure 8 shows another example of a partition of data in time, in accordance with the time-based partitioned cube.
Figure 9 shows a flowchart for a method of using a TB cube for querying and reporting, in accordance with an embodiment of the time-based partitioned cube.
Figure 10 shows an example of a multi-level partitioned cube with partitioning in several dimensions, in accordance with the dimension-based partitioned cube.

### DETAILED DESCRIPTION OF THE PREFERRED EMBODIMENTS

A dimension-based partitioned cube (DB cubes) is a multidimensional data source used for querying and reporting in the field of online analytical processing (OLAP). DB cubes involve a process whereby a set of member cubes is treated as one large cube. The member cubes are created separately and then pulled together as a larger cube by a control cube. The control cube contains information about the overall structure of the cube (i.e., dimensions and measures) and certain category related information that is valid for the entire larger cube (i.e., the structure of the dimension, the expressions for calculated categories, etc.). The member cubes are distinct from each other in a single dimension. That is, there is a dimension in which the categories in each member cube are distinct from those in all the other member cubes.

A dimension-based partitioned cube (DB cube) is a potentially large collection of cubes that is seen as a single cube by a user. A member cube is one of the constituents of a DB cube. Each member cube is a regular cube, i.e., it can be accessed either directly as an independent cube or transparently as a component of a DB cube. Member cubes normally are selected from (a subset of) a cube group partitioned along a dimension, such as the time dimension. A cube group is a set of cubes that are generated from a common model by a partitioning of the model horizontally (e.g., alongside the time dimension) and, optionally, also vertically (e.g., by aggregation to some level in a dimension). The amalgamating agent of a DB cube is its control cube. Typically, there is one control cube per DB cube. The control cube is a cube that contains metadata about members of a given DB cube. The metadata describes what they are, how they are related to each other on time scale, and how they are deployed. Both membership and deployment can be dynamically changed.

One purpose of a control cube is to provide the entry point for end users to access the DB cube. Another purpose of a control cube is to acquire dynamically the control data about the current set of member cubes (e.g., if partitioned in the time dimension, their mapping onto amalgamated time dimension and their deployment). The MOLAP query engine uses this information at run time to resolve queries (i.e., to decompose and route them to member cubes). Any number of DB cubes can be formed from a given cube group, each with its own control cube. Their memberships can overlap.

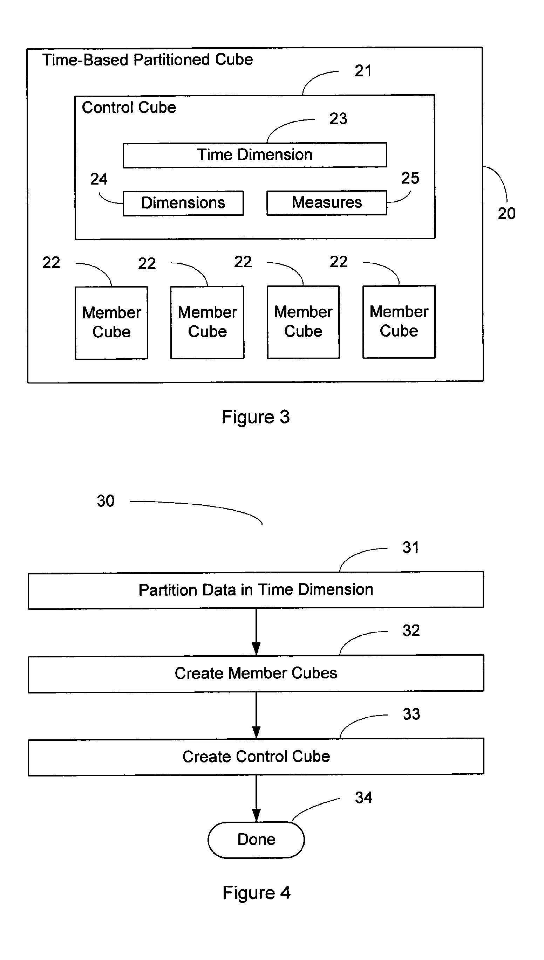

Figure 2 shows an example of a DB cube 16, in accordance with an embodiment of the present invention. The DB cube 16 comprises one or more member cubes 17 for storing data partitioned along a dimension, and a control cube 18 for accessing the member cubes 17. The control cube 18 has an entire partitioning dimension 19 relative to the member cubes 17. The control cube 18 may also have a listing of the union of other dimensions that member cubes 17 may have, and a listing of the union of measures that member cubes 17 may have. The control cube 21 may also have a listing of the union of categories that member cubes 17 may have. Member cubes 17 may be added to, or removed from, the DB cube 16.Figure 3 shows an example of a time-based partitioned cube (TB cube) 20, in accordance with an embodiment of the DB cube 16. The TB cube 20 comprises one or more member cubes 22 for storing data partitioned along the time dimension, and a control cube 21 for accessing the member cubes 22. The control cube 21 has an entire time dimension 23 relative to the member cubes 22, a listing of the union of other dimensions 24 that member cubes 22 may have, and a listing of the union of measures 25 that member cubes 22 may have. The control cube 21 may also have a listing of the union of categories that member cubes 22 may have. Member cubes 22 may be added to, or removed from, the TB cube 20.

The TB cube 20 is described in further detail below. It should be appreciated that DB cubes 16 can be partitioned along other dimensions (e.g., product, geography, etc.).

The members (member cubes) 22 of the TB cube 20 each cover a distinct time period (e.g., year, quarter, month, day, etc.). The length of the time period and the granularity of the time dimension do not need to be the same in all cubes. I.e., one member 22 can cover a year, structured into quarters and months, while some other member 22 can cover a month with details kept at day levels.

For example, a TB cube 20 may span the time interval January 2000 to May 2002, with member cubes 22 for the following five time intervals:
2000
2001
Q12002 (first quarter of 2002)
Apr 2002 (April 2002)
May 2002
Each time interval comprises a member cube 22. The entire time dimension 23 (i.e., the time dimension that spans all five members) may be ragged: all time levels do not need to be instantiated in all members. One possible use of a ragged time dimension 23 is that historic data can be kept aggregated over time while more recent and current data may be kept in detail. Thus, in the above example, the time granularity in cube 2000 may be "month", while the time granularity may be "day" in the remaining four cubes (cubes 2001 through May 2002).

Figure 4 shows an example of a method for transforming a body of data into a TB cube 20 (30), in accordance with an embodiment of the present invention. The method (30) comprises steps of partitioning the data in time (31), creating member cubes 22 (32), and creating the control cube 21 (33). Once these three steps are performed, the method (30) is done (34).

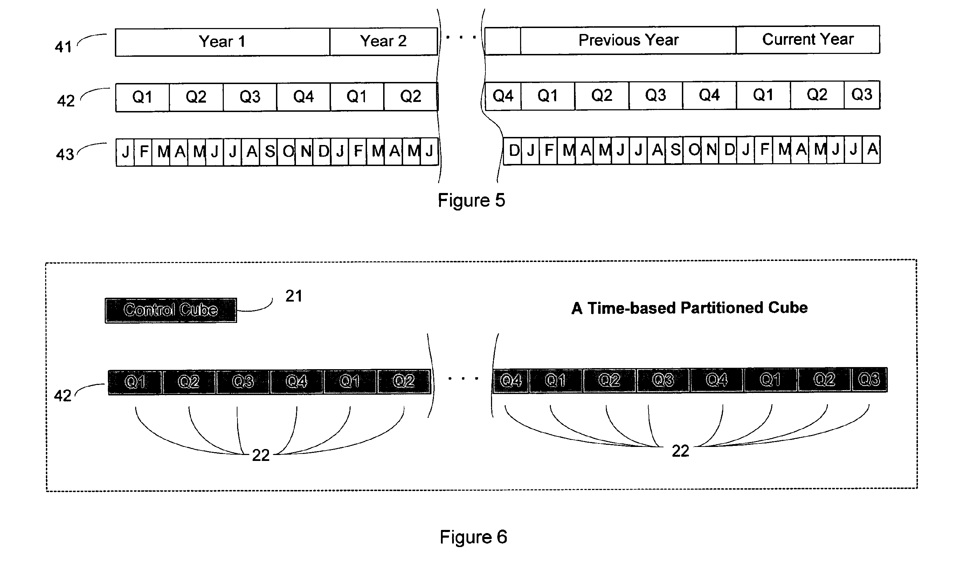

The first step in the method (30) is to partition the data in time (31). The data is split along its time dimension into a number of smaller partitions. Each partition pertains to a well-defined time interval, such as Week, or Quarter. Figure 5 shows an example of a schematic representation of partitioning data in time (31), in accordance with an embodiment of the TB cube 20. Splits at several levels with different partition sizes of Year 41, Quarter 42, and Month 43, are shown in Figure 5.

Figure 6 shows an example of a TB cube 20 having a control cube 21 and member cubes 22 comprising quarterly time partitions 42. Equidistant partitioning, having a partition width the same as the period of regular cube update, greatly simplifies the update run: The data collected during the update cycle is used to create another member cube 22, without any affect on older member cubes 22. With the above example, a new member cube 22 would be created at the end of September of the current year.

Individual member cubes 22 store both data and metadata that reflect only their respective time period. Therefore a query that is evaluated in any member cube 22 is evaluated in its correct time context and is not affected by data attributes that may have been present in the past (i.e., in previous cubes) or the future (i.e., the cubes that follow). Querying member cubes 22 in a chronological (or other) sequence will reflect changes that have occurred in each business dimension 24.

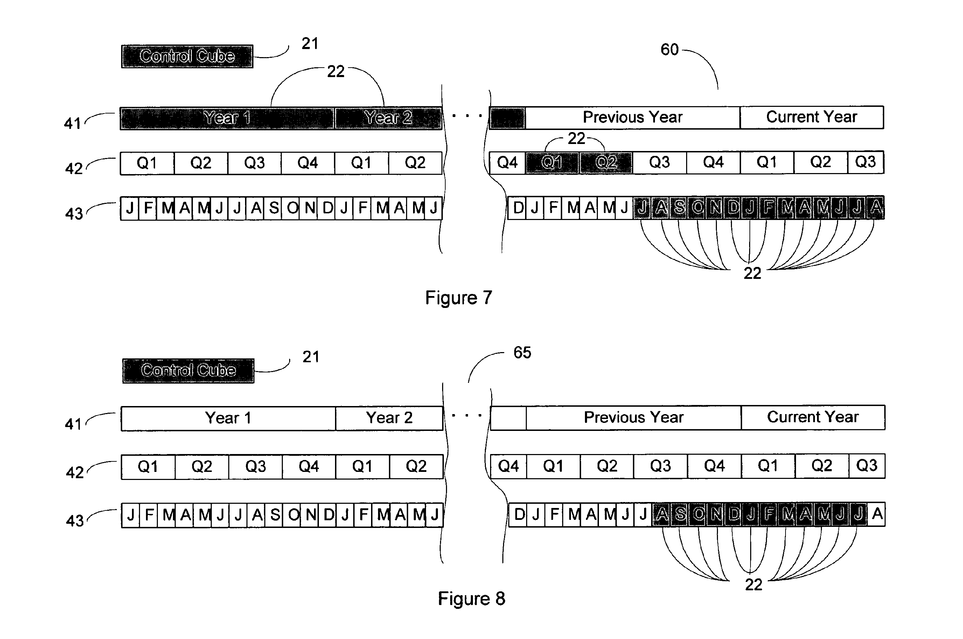

It is not necessary that the time periods be all of the same lengths for all member cubes 22. Figure 7 shows another example of a partition of data in time 60, in accordance with an embodiment of the TB cube 20. Assuming that the current month is August, the time partitions are:
Year 1;
Year 2;
...;
Year X (where X is two years before the current year);
Quarter 1 of Previous Year;
Quarter 2 of Previous Year;
July of Previous Year;
August of Previous Year;
September of Previous Year;
October of Previous Year;
November of Previous Year;
December of Previous Year;
January of Current Year;
February of Current Year;
March of Current Year;
April of Current Year;
May of Current Year;
June of Current Year;
July of Current Year; and
August of Current Year
The above scheme could be used when the emphasis on recent data is much higher than that on historical data.

If only recent data is to be analyzed in full detail, then it may be advantageous to store historical data in a more compact, pre-aggregated form, with coarser time granularity. Widening the time interval for historical data, in combination with change in time granularity (as in the example above), then serves to balance the individual member cube 22 sizes and, therefore, their performance. Aggregation of older data also helps to maintain the overall on-disk size of a whole TB cube 20 within reasonable limits.

The consolidation of historical data can be part of a periodical update: At specific points of time (e.g., end of each quarter or year end) certain older member cubes 22 can be aggregated into a single cube, with coarser time granularity, if desired.

Figure 8 shows another example of a partition of data in time 65, in accordance with the TB cube 20. The partition is based on a sliding time window. In this example, only new data is of interest. The TB cube 20 consists of, say, 12 monthly cubes 22 for the most recent months. Every time a new month (say August) is added, the oldest one (here, August Previous Year) is dropped.

Once the data is partitioned in time (31), member cubes 22 are created (32). A set of partitions is selected that covers the time span of data contiguously and then a cube is created from each selected partition. This process yields what will become the set of member cubes 22 of a TB cube 20. For instance, the member cubes 22 could arise from partitioning by Quarters 42, as schematically represented in Figure 6.

Once the member cubes 22 are created (32), a control cube 21 is created (33). In the example of a TB cube 20 shown in Figure 6, the TB cube 20 has a control cube 21 and member cubes 22 comprising quarterly time partitions 42. The control cube 21 serves as the physical entry point to a TB cube 20. I.e., the control cube 21 is the agent that represents, to the consumer, the data that is distributed over member cubes 22 as one single whole. More specifically, the control cube 21 is used:
- To represent to the outside word the data stored in member cubes 22 of the entire TB cube 20;
- To handle queries against the entire TB cube 20 - analyze, decompose and route them to the appropriate member cube(s) 22, and aggregate the partial results to be returned to its consumer; and
- To keep track of member cubes 22 and their deployment when the composition of a TB cube 20 changes (i.e., when member cubes 22 are added to, or consolidated within, or dropped from, the set).
By designing specific control cubes 21, more than one TB cube 20 can be defined using the same pool of member cubes 22.

A TB cube 20 may have the entire time dimension 23 comprised of adjacent, nonoverlapping and, possibly, non-equidistant time dimensions of its member cubes 22. The entire time dimension 23 may be ragged, and partial non-conformity of time dimension between member cubes 22 is acceptable. For example, the member cube 1998 can have time rollup levels "year", "quarter", "week", and "day", while the member cube 1999 can have levels "year", "quarter", "month", and "day". However, non-conformity of time dimension between member cubes 22 may have some consequences. In the above example, a query "set of descendants of All Years at level = Month" will yield a result set with no descendants from cube 1998. Also, a pair of relative time categories, such as "current month" and "last year current month", cannot be defined between two such years.

The corresponding objects (such as categories, dimensions 24, and measures 25) of member cubes 22 have the same identification (ID) number. Preferably, the attributes (i.e., texts, codes, etc.) of corresponding objects are identical (so that the metadata query can be routed to any cube that contains the object). However, not all the objects need to be present in all member cubes 22 and the category rollup hierarchies need not be the same.

In other words, the dimension 24 of member cubes 22 does not need to be (exactly) conforming. For instance, if an employee A moves from Boston to New York in February, it is acceptable to move A's category in the hierarchy. For example, A could be a child of Boston in the January cube but also a child of New York in the February cube. A *Get Children* function executed against the TB cube 20 would yield different results depending on the current time context. For example, Boston children would include A in January or Q1, but not in February or March. A query
Sales (Q1, North America)
would include A's contribution made in both Boston and New York, while
Sales (Q1, Boston) or Sales (Jan, North America)
would include only the employee's Boston contribution.

The TB cube 20 support of this feature (known as slowly changing dimensions) can be applied not only to moving categories about hierarchy but also to other items, including discontinued products (or introducing new products), company reorganization, etc. The fact that metadata queries will show only those categories that are applicable in a given time context may significantly reduce the frequency of N/A cells and rows in reports.

The member cubes 22 that comprise a TB cube 20 are normally selected from a cube group, i.e., one that is generated by a database modeling tool from a common model. In such a case, the dimensions of member cubes 22 will be conforming, with the exception that not all children of a category may be present in each cube 22. In each cube 22, only those categories for which some transactions have occurred in the given time period are instantiated.

For example, if a category "Screw" has children "Nuts" and "Bolts" and the TB cube 20 consists of members
Jan, Feb, Mar and Apr
and
there were no sales of Bolts in January
there were no sales of Nuts in February
there were no sales of either Nuts or Bolt in April
then Screw will have both children - Nuts and Bolts - only in the Mar cube. In the Jan cube, the child Nuts will be missing. In the Apr cube, the whole subtree {Screw, Nuts, Bolts} will be missing.

It is not required that all dimensions 24 exist in all member cubes 22. For example, if a company introduced tracking of sales channels in 2001, the member cube 22 for year 2000 will have the Sales Channels dimension missing. Similarly, not all measures 25 need to exist in all member cubes 22. Furthermore, measures do not need to be in the same order (and organized into the same folders) in all member cubes 22.

The control cube 21 does not store data. As is described above, the control cube 21 serves as entry point (proxy) for the whole TB cube 20. To access the TB cube 20, a user opens (connects to) the control cube 22. The control cube 21 also serves as a container for the scaffolding metadata for whole TB cube 20, namely:
- How the time dimension 23 is partitioned, i.e., the hierarchy of time dimension 23 above the roots of member cubes 22;
- The complete list of all dimensions 24 that exist in member cubes 22; and
- The complete list of all measures 25 (and the structure of measure folders, if any) that exist in member cubes 22.
The control cube 21 dynamically builds the control information used by a query engine:
- To route queries (both metadata and data queries) to individual member cubes 22; and/or
- To decompose queries whose time interval spans several member cubes 22, dispatch them, and aggregate the partial results before passing the query result back to the user.
Examples of metadata stored in control cubes 22 are described below.

There is a dimension record for every dimension 24 that exists in a member cube 22. As mentioned above, except for the Time dimension 23 and Measure dimensions, not all dimensions 24 need to be present in all member cubes 22. All dimensions 24 except the partitioning (Time) dimension 23 and Measure dimension contain only a single category: the dimension root. The order of the dimension 24 that is specified in a control cube 21 is the order in which the dimensions are presented by a *Get Dimension List* call against connection to (the control cube 21 of) the TB cube 20. The order may differ from that returned by a *Get Dimension List* call for a connection to a specific member cube 22.

There is a Measure record for every measure 25 that exists in a member cube 22. As mentioned above, some measures 25 and/or measure folders can be missing in some member cubes 22. A Measure dimension structure as defined in the control cube 21 is the one that is presented to the user in a *Get Measure List* call and a *Get Children* call against measure dimension.

The time dimension 23 is the partitioning dimension in a TB cube 20. The time dimension 23 in a control cube 21 describes the time interval that spans at least the time intervals of all member cubes 22. Furthermore, the time dimension 23 potentially encompasses other (past or future) time intervals. The granularity of time in control cube 21 may, but need not, correspond to that in member cubes 22. I.e., the granularity may be either coarser or finer. Also, the hierarchy may be ragged. A condition is that the root categories of time dimensions 23 of member cubes 22 must be present in the time hierarchy of control cube 21. Any number of alternate time hierarchies can also be predefined in control cube 21, in terms of time categories of its primary hierarchy. Both the mapping of time hierarchies of member cubes 22 onto the hierarchy (or hierarchies) predefined in control cube 21, as well as the resolution of non-conformity in time span and granularity, are dynamic, based on control data (TB cube's 20 current membership and its deployment) acquired by MOLAP query engine dynamically, at run time.

Internally, each member cube 22 has a unique ID assigned to it: member_no. This ID is a number between 1 and N (N = number of member cubes 22) assigned in reverse chronological order. In the January 2000 to May 2002 example described above, the assignment would be:

| *Member_no* | *member cube* |
|---|---|
| 5 | *{2000 cube file address}* |
| 4 | *{2001 cube file address}* |
| 3 | *{Q1 2002 cube file address*} |
| 2 | *{Apr 2002 cube file address}* |
| 1 | *{May 2002 cube file address}* |

Queries that are issued against a control cube 21 are dispatched to one or more member cubes 22, depending on the time dimension 23 category specified for the query. The facility that handles decomposition, dispatch and reassembling of the query results is referred to as the MOLAP query engine. There are two controls maintained by the query engine and utilized by it to route queries: current time context and time category membership table.

The time category membership table is a dynamic table. A query engine in the database application internal cache of the control cube 21 maintains the time category membership table. The time category membership table is created at the time of a control cube 21 Open session and it is discarded by its Close session.

Preferably, the table contains one row for each partitioning (i.e., time category) that has been encountered (i.e., referenced) during the Open/Close session. Preferably, there are three columns (8 byte per record):
- Category ID (the unique key);
- Member_no of the cube where this category exists (for example, the category Apr 2001 will have member_no = 4, Apr 2002 will have member_no = 2;
- Properties: list of flags utilized by the query engine when dispatching (E.g., "Is the category the root of a member?"; "Does the category exist on alternate path only?"; "Are the children of this category already loaded into the table?"; etc.).

The current time context is a control derived from the time category (or the set of time categories) that is included in the context list of categories specified in the encompassing high-level query. To route a query, the current time context prevailing at the time of query is augmented by the time context from the query call (e.g., domain list specified in data query, or parent category for *Get Children,* etc.). Next, for each category from the resulting time context, the query engine determines the member_no (or list of member_nos) of cubes to which the category belongs. The source of this information is the time category membership table and/or the hierarchy of control file time dimension. For example, if the resulting query context contain categories Q2 2002 and Apr 2002, the member_no lists will be

| | |
|---|---|
| Category | Member_nos |
| Q2 2002 | 1,2 |
| Apr 2002 | 2 |

The query is routed to the intersection of all member lists for the resulting time context (cube member_no = 2 in above case).

Advantageously, the TB cube 20 allows for better performance when updating a cube on a regular interval (say weekly or monthly). The TB cube 20 also allows for improved performance when accessing such a cube 20. Better scalability is also provided with the TB cube 20. Larger data sets can be handled and the performance is better. Furthermore, metadata time dependency is intrinsic to a TB cube 20.

The concept of time partitioning of raw data (and identification of partitions that cover the time span of interest) is inherent in the TB cube 20. The ability to convert data from selected partitions into independent member cubes 22 (with aggregation and time granularity set as appropriate) and the ability to add and drop member cubes 22 dynamically (with no effect on the rest of the set) is also provided by the TB cube 20.

The TB cube 20 also comprises a routing algorithm that is able to present and handle the set of independent cubes as if it were a single big cube. The routing algorithm analyzes queries against the data (or metadata) stored in member cubes 22, dispatches sub-queries to appropriate member cubes 22 based on the time context, and consolidates the partial results. As indicated, the routing scheme adapts itself dynamically to changes in the composition of the member cube 22 set as well as variances in time granularity of individual members 22.

The TB cube 20 provides the ability to dynamically handle changes in data aggregation and/or its time granularity in any portion of time scale. The TB cube 20 also provides the ability to implement simple security schema: different control cubes 21 over the same pool of member cubes 22 can restrict the data access to different portion of data for different users.

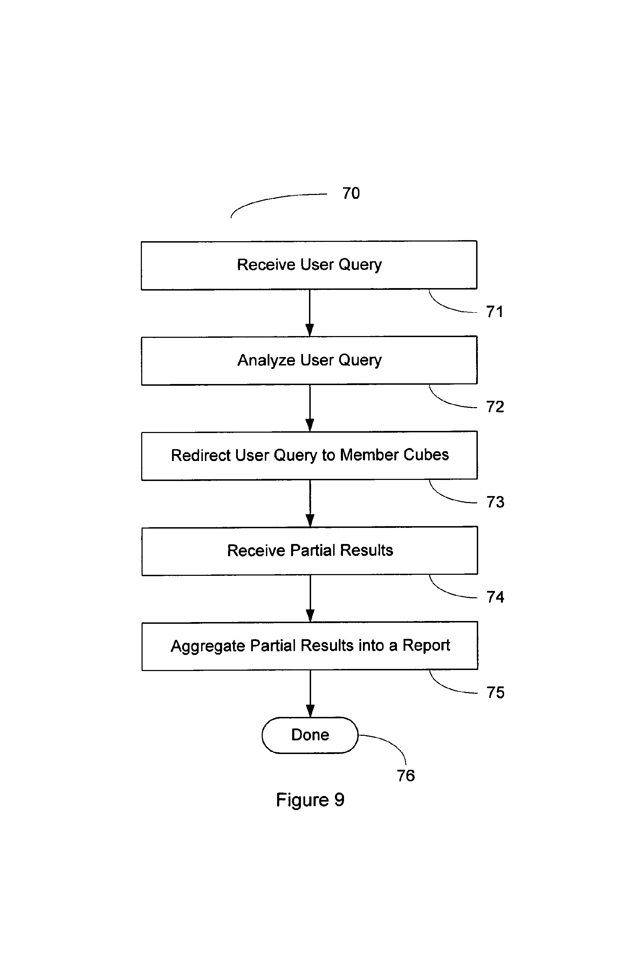

Figure 9 shows a flowchart for a method of using a TB cube 20 for querying and reporting (70). The method (70) begins with the TB cube 20 receiving a query from a user (71). The control cube 21 intercepts the user query. The control cube 21 analyzes the user query (72) and determines the member cube(s) 22 to redirect the query (73). The member cubes 22 return the results (i.e., partial results) from the redirected queries to the control cube 21 (74). The control cube 21 aggregates the partial results into a final result for the user (75). The method (70) is done (76). Other steps may be added to the method (70).

The logic described in the flowchart shown in Figure 9 may be added to a query engine, such as a MOLAP query engine, to handle queries made to TB cubes 20. The user does not know (and does not need to know) whether the query has been evaluated in a TB cube 20 or a regular cube. A user may the put the result into an appropriate cell of a report without knowing (and caring) where the value came from. Thus, the use of a TB cube 20 is transparent to the user.

Specific advantages to the TB cube 20 include scalability, updatability, expanded functionality, and run time performance.

With respect to scalability, the size of a TB cube 20 is theoretically unlimited. A TB cube 20 can comprise any number of member cubes 22 (practically perhaps up to several thousands) each of which can be huge regular cubes. A TB cube 20 implementation may thus solve one hurdle that is experienced with cubes: the inability to accommodate unlimited data.

With respect to updatability, the incremental update of a TB cube 20 will amount to simply adding one more member cube 22 to the TB cube 20, without any need to rebuild the remaining member cubes 22. This sharply reduces both the update time requirements of current practice (where the whole cube must be rebuilt) and the dangers of instability introduced by such update. Also, the diminishing importance of historic data is easier to handle: It would be much easier (and faster) to drop from a TB cube 20, for instance, three (daily details) member cubes 22 for Jan, Feb and Mar of last year and replace them by one (consolidated) member cube 22 for Q 1 than to perform similar update of an equivalent regular cube. Removing/archiving irrelevant old data from a TB cube 20 amounts to dropping of a member 22 from the cube 20 (that can be accomplished by simple editing of a definition file).

With respect to expanded functionality, external partitioning in the time dimension 23 together with allowing non-conformity of other dimensions 24 introduces support of slowly changing dimensions into cubes.

With respect to run time performance, the deterioration of a TB cube 20 performance as compared to the performance of an equivalent regular cube is roughly proportional to the number of member cubes 22 into which the query (either metadata or data) is decomposed. A query routed to a single smaller member cube 22 should execute much faster than in an equivalent regular cube (shorter bitmaps to handle). This may also be beneficial for decomposed queries: the overhead of routing and aggregation will at least be partially counterbalanced by the gains from queries to smaller cubes.

Improvement in zero-suppress performance can be expected in reports generated for specific (narrow) time (interval). The categories that normally yield empty rows (or columns) in some time context in regular cubes will not be available for reporting in TB cube 20 in that time context. In other words, a report will be generated without the categories that do not exist in the time interval, so there will be no need to suppress them.

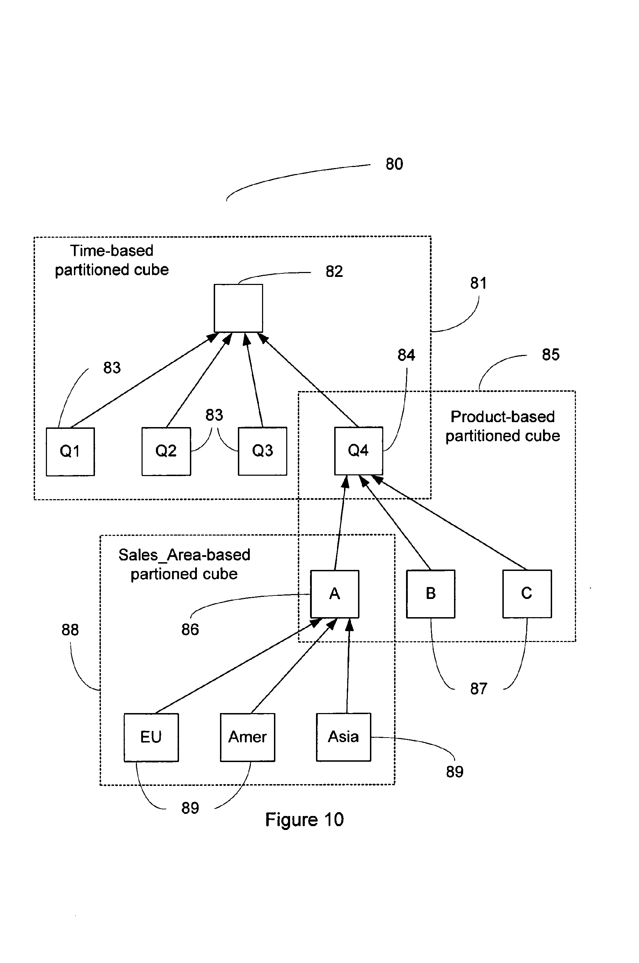

Multi-level partitioning can be employed by partitioning a member cube 17 of a dimension-based partitioned cube 16 along another dimension. Figure 10 shows an example of a multi-level partitioned cube 80 with partitioning in several dimensions, in accordance with an embodiment of the DB cube 16. The multi-level partitioned cube 80 comprises three dimension-based partitioned cubes 16: a time-based partitioned cube 81, a product-based partitioned cube 85, and a sales_area-based partitioned-cube 86. The time-based partitioned cube 81 comprises a control cube 82 and member cubes 83 and 84. The product-based partitioned cube 85 comprises a control cube 84 and member cubes 86 and 87. The sales_area-based partitioned cube 88 comprises a control cube 86 and member cubes 89.The time-based partitioned cube 81 is partitioned into quarters (i.e., Q1, Q2, Q3, and Q4). The product-based partitioned cube 85 is partitioned into product (i.e., A, B, and C). The sales_area-based partitioned cube 88 is portioned into geographic sales areas. Note that the Q4 member cube 84 of the time-based partitioned cube is also the control cube 84 of the product-based partitioned cube 85. Moreover, the product A member cube 86 of the product-based partitioned cube 85 is also the control cube 86 of the sales_area-based partitioned cube. Thus, a dimension-based partitioned cube 16 is multi-layered when one or more of its member cubes 17 is the control cube 18 of another dimension-based partitioned cube 16.

The DB cube 16 and the TB cube 20 according to the present invention may be implemented by any hardware, software or a combination of hardware and software having the functions described above. The software code, either in its entirety or a part thereof, may be stored in a computer readable memory. Further, a computer data signal representing the software code, which may be embedded in a carrier wave, may be transmitted via a communication network. Such a computer readable memory and a computer data signal are also within the scope of the present invention, as well as the hardware, software and the combination thereof.

While particular embodiments of the present invention have been shown and described, changes and modifications may be made to such embodiments without departing from the true scope of the invention.

## Claims

1. A system for storing data, the system comprising:
one or more member cubes for storing data partitioned along a dimension;
a control cube for accessing the member cubes.

2. The system as claimed in claim 1, wherein the control cube has an entire partitioned dimension relative to the member cubes.

3. The system as claimed in claim 2, wherein the control cube further has:
a listing of other dimensions of the member cubes; and
a listing of measures of the member cubes.

4. The system as claimed in claim 1, wherein the data is partitioned along the time dimension.

5. The system as claimed in claim 4, wherein the control cube has:
an entire time dimension relative to the member cubes;
a listing of other dimensions of the member cubes; and
a listing of measures of the member cubes.

6. The system as claimed in claim 5, wherein a member cube is added to the system.

7. The system as claimed in claim 6, wherein a member cube is removed from the system.

8. The system as claimed in claim 5, wherein the control cube restricts access to member cubes.

9. The system as claimed in claim 5, further comprising a plurality of control cubes, each control cube coupled with a group of member cubes from a pool of member cubes to form a separate dimension-based partitioned cube.

10. The system as claimed in claim 9, wherein different control cubes over the same pool of member cubes restrict data access to different portions of data for different users.

11. The system as claimed in claim 2, wherein a member cube is the control cube of another dimension-based partitioned cube.

12. A method of transforming a body of data into a dimension-based partitioned cube, the method comprising the steps of:
partitioning the data into one or more dimension-based partitions;
creating member cubes corresponding to the one or more dimension-based partitions; and
creating a control cube for representing the data distributed over the member cubes.

13. The method as claimed in claim 12, wherein the data is partitioned along the time dimension.

14. The method as claimed in claim 13, wherein the data is partitioned into equidistant time intervals.

15. The method as claimed in claim 13, wherein the data is partitioned into non-equidistant time intervals.

16. The method as claimed in claim 13, wherein the data is partitioned into a sliding window of time intervals.

17. A method of querying a dimension-based partitioned cube, the method comprising the steps of:
analyzing a query received for a body of data organized into a dimension-based partition cube;
redirecting the query to one or more member cubes; and
aggregating results received from the one or more member cubes.

18. The method as claimed in claim 17, wherein the data is partitioned along the time dimension.

19. An online analytical processing query engine comprising a logic module for implementing the method of claim 17.

20. An online analytical processing query engine comprising a logic module for implementing the method of claim 18.
